(19) Europäisches Patentamt
European Patent Office
Office européen des brevets

(11) Veröffentlichungsnummer: **0 073 392**
**B1**

(12) # EUROPÄISCHE PATENTSCHRIFT

(45) Veröffentlichungstag der Patentschrift: **10.12.86**

(21) Anmeldenummer: **82107418.4**

(22) Anmeldetag: **16.08.82**

(51) Int. Cl.⁴: **C 08 G 18/12**, C 08 G 18/42, C 08 G 18/44, C 08 G 18/08, C 08 G 18/75, C 08 G 18/72, C 09 D 3/72, C 08 J 7/04

(54) **Überzugmittel aus Polyurethan-Dispersionen und ihre Verwendung für Deckstriche und Finishs.**

(30) Priorität: **28.08.81 DE 3134161**

(43) Veröffentlichungstag der Anmeldung: **09.03.83 Patentblatt 83/10**

(45) Bekanntmachung des Hinweises auf die Patenterteilung: **10.12.86 Patentblatt 86/50**

(84) Benannte Vertragsstaaten: **BE DE FR GB IT NL**

(56) Entgegenhaltungen:
**EP - A - 0 003 785**
**EP - A - 0 004 069**
**FR - A - 2 099 458**
**GB - A - 1 191 260**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Thoma, Wilhelm, Dr., Birkenweg 25, D-5090 Leverkusen 3 (DE)**
Erfinder: **Noll, Klaus, Dr., Morgengraben 6, D-5000 Köln 80 (DE)**
Erfinder: **Nachtkamp, Klaus, Dr., Leuchterstrasse 112, D-5000 Köln 80 (DE)**
Erfinder: **Pedain, Josef, Dr., Haferkamp 6, D-5000 Köln 80 (DE)**
Erfinder: **Schröer, Walter, Dr., Nicolai-Hartmann-Strasse 29, D-5090 Leverkusen 1 (DE)**

**EP 0 073 392 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Beschichtungsmassen auf Basis wässriger Polyurethan-Dispersionen sowie die Verwendung der Beschichtungsmassen zur Herstellung von Deckstrichen bzw. Finishs auf flexiblen Substraten, vorzugsweise auf PVC. Die erfindungsgemässen Überzugsmittel bestehen aus einer wässrigen Polyurethandispersion mit bestimmten chemisch-physikalischen Eigenschaften.

Die Herstellung von Polyurethan-Beschichtungen auf PVC ist im Prinzip bekannt. So werden beispielsweise in den US-Patentschriften 3 262 805, 4 017 493 und 4 045 600 Verfahren zur Beschichtung von PVC unter Verwendung von in organischen Lösungsmitteln gelösten Einkomponenten- bzw. Zweikomponenten-Polyurethansystemen beschrieben.

Die Verwendung von lösungsmittelhaltigen Überzugsmitteln ist jedoch zunehmend mit Nachteilen verbunden, aus ökonomischen und insbesondere ökologischen Gründen ist es erforderlich, die Verwendung organischer Lösungsmittel soweit wie möglich einzuschränken oder gar ganz zu vermeiden.

Aus der DE-A-1 769 387 (GB-PS 1 191 260) ist es bekannt, PVC mit wässrigen Polyurethan-Dispersionen zu verkleben. Als Deckstrich oder Finish auf PVC konnten sich die wässrigen Polyurethan-Dispersionen jedoch nicht durchsetzen, da es bisher nicht möglich war, Produkte zur Verfügung zu stellen, welche einerseits gute Haftung an PVC besitzen und andererseits das in der Beschichtungsindustrie für Deckstriche bzw. Finishs geforderte hohe Qualitätsniveau (hoher Erweichungspunkt; grosse mechanische Festigkeit; Stabilität gegen Hydrolysenalterung; geringe Quellung in Weichmachern; Sperrwirkung gegen die Migration der im PVC enthaltenen Weichmacher; Vermeidung von Verfärbung bei den Geliertemperaturen der PVC-Plastisole; angenehmer trockner Griff) aufweisen.

Mit den Überzugsmitteln, die in DE-A-2 807 479 (EP-A-0 003 785) beschrieben sind, gelang es erstmals, wässrige Polyurethan-Dispersionen zur Verfügung zu stellen, die den oben angeführten Anforderungen in etwa genügten und es ermöglichten, Beschichtungen auf PCV, insbesondere auf geschäumtem PVC, ohne Verwendung von Lösungsmitteln herzustellen. Es mussten jedoch eine bestimmte Mischung von zwei definierten Polyurethan-Dispersionen verwendet werden.

Jedoch weisen auch diese Überzugsmittel noch einige Nachteile auf, die ihren Einsatz erschweren:

- Die Knickbeständigkeit des fertigen Verbundmaterials ist oft nicht ausreichend und
- Die Haftung zum PVC lässt zu wünschen übrig.

Vor allem aber ist die Tatsache, dass die Überzugsmittel aus Mischungen von zwei Polyurethan-Dispersionen bestehen, von erheblichem Nachteil. Solche Mischungen sind stets kostspieliger und aufwendiger herzustellen und bergen Fehlerquellen. Zudem muss die Verträglichkeit beider Systeme garantiert sein.

In der DE-A-2 811 148 (EP-A-4069) wird ein Verfahren zur Herstellung von PU-Dispersionen unter Verwendung von Azinen oder Hydrazonen in wasserfreiem Medium und anschliessender Dispergierung beschrieben, sowie die Verwendung dieser Dispersionen für Beschichtungen, Lacke und Überzüge beansprucht. Die Dispersionen haben nicht die Zusammensetzungen entsprechend den erfindungsgemässen Überzugsmitteln für PVC.

Es wurde nun gefunden, dass die Nachteile des Systems nach DE-A-2 807 479 beseitigt werden können und es trotzdem möglich ist, mit einheitlichen Polyurethan-Dispersionen Beschichtungen auf PVC zu erzeugen, die ein ausserordentliches Qualitätsniveau aufweisen, wenn man eine Dispersion bestimmter Zusammensetzung verwendet. Dies ist um so überraschender, als es auch nicht annähernd möglich ist, mit den Dispersionseinzelkomponenten nach DE-A-2 807 479 brauchbare Beschichtungen oder Finishs auf geschäumtem oder kompaktem PVC zu erzeugen, die den wesentlichen Qualitätsanforderungen genügen.

Gegenstand der Erfindung sind daher Überzugsmittel auf der Basis wässriger, emulgatorfreier Polyurethandispersionen mit einem Festkörper aus im wesentlichen linearen Polyesterdiolen, Diisocyanaten, hydrophile Gruppen tragenden, gegenüber Isocyanaten mono- und/oder difunktionellen Verbindungen, sowie gegebenenfalls nieder-molekularen trifunktionellen Komponenten und difunktionellen Kettenverlängerern, sowie ferner gegebenenfalls üblichen Zusatzstoffen, Hilfsmitteln und Katalysatoren dadurch gekennzeichnet, dass der Festkörper aus

A) 30 bis 60 Gew.-%, vorzugsweise 35 bis 50 Gew.-%, eines Hexandiol-1,6-polyesters mit einem Molekulargewicht von 500 bis 6000, bevorzugt 500 bis 3000;

B) 0 bis 8 Gew.-%, vorzugsweise 0,5 bis 5 Gew.-%, eines niedermolekularen Triols mit dem Molekulargewicht 92 bis 399;

C) 3 bis 30 Gew.-%, vorzugsweise 5 bis 20 Gew.-% einer oder mehrerer kationische und/oder anionische Gruppen tragender und/oder nicht-ionische Polyoxyethylensegmente aufweisende, ein- oder mehrfunktioneller Verbindungen;

D) 20 bis 50 Gew.-%, vorzugsweise 25 bis 40 Gew.-%, eines Diisocyanats der allgemeinen Formel

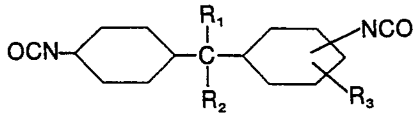

in der

$R_1$, $R_2$ und $R_3$ gleich oder verschieden sind und Wasserstoff oder einen geradkettigen oder verzweigten aliphatischen Kohlenwasserstoffrest mit 1 bis 4 C-Atomen bedeuten,

E) 2,5 bis 20 Gew.-%, vorzugsweise 4 bis 18 Gew.-%, anderer aliphatischer und/oder cycloaliphatischer Diisocyanate, sowie

F) 0,5 bis 5 Gew.-%, vorzugsweise 0,8 bis 3 Gew.-%, Hydrazin, aufgebaut ist.

Die erfindungsgemäss einzusetzenden Hexandiol-1,6-polyester A) enthalten als Säurekomponente vorzugsweise aliphatische Dicarbonsäuren, z.B. Bernsteinsäure, Korksäure, Acelainsäure, Sebacinsäure, Hexahydrophthalsäureanhydrid, Endomethylentetrahydrophthalsäureanhydrid, Glutarsäureanhydrid, Maleinsäure, Fumarsäure, bevorzugt jedoch Adipinsäure. Weiterhin ist auch Kohlensäure bevorzugt, jedoch können zur Herstellung der Polyester natürlich nur Derivate der Kohlensäure wie ihre Diester, z.B. Diphenylcarbonat, Diethylcarbonat oder auch Phosgen herangezogen werden.

Weniger bevorzugt ist die Mitverwendung von aromatischen Dicarbonsäuren, wie z.B. Phthalsäure, Isophthalsäure und Terephthalsäure. Neben Hexandiol-1,6 können in einer weniger bevorzugten Ausführungsform anteilig andere Diole, z.B. Butandiol-1,4, Diethylenglykol oder HO $(CH_2)_6$–O–CO–$(CH_2)_5$–OH eingesetzt werden, jedoch soll deren Aneil etwa 20 Mol-% nicht übersteigen. Das Molekulargewicht der Hexandiol-1,6-polyester A) soll zwischen 500 und 6000, bevorzugt 500 bis 3000, liegen.

Unter den niedermolekularen Triolen B) seien besonders Glycerin, Trimethylolpropan, Trimethylolethan und die verschiedenen isomeren Hexantriole, sowie 1,3,5-Trishydroxy-cyclohexan erwähnt. Ferner sind deren niedere Alkoxylierungsprodukte geeignet. Die Molekulargewichte sollen vorzugsweise zwischen 92 und 399 liegen.

Als hydrophile Verbindungen C) werden kationische und/oder anionische hydrophile Gruppen und/oder nicht-ionische hydrophile Polyoxyethylenisocyanate aufweisende, im Sinne der Isocyanat-Additionsreaktionen mono- und di-, insbesondere difunktionelle, Aufbaukomponenten der beispielhaft in den Literaturstellen bezüglich der Herstellung von wässrigen Polyurethandispersionen und lösungen beschriebenen Art verwendet. Dies sind beispielsweise ionische bzw. potentielle ionische Gruppen (z.B. tert.-Amingruppen, die in Ammoniumgruppen übergehen, wenn sie angesäuert oder alkyliert werden) aufweisende Dihydroxyverbindungen, -diamine oder -diisocyanate, oder auch Polyethylenoxid-Einheiten aufweisende Monoalkohole, Monoamine oder Monoisocyanate.

Zu den bevorzugten, hydrophil modifizierten Aufbaukomponenten C) gehören insbesondere die Sulfonatgruppen aufweisenden aliphatischen Diole gemäss DE-OS 2 446 440 der allgemeinen Formel

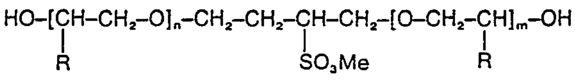

in der

R Wasserstoff oder ein organischer Rest mit 1 bis 8 Kohlenstoffatomen ist,

n und m Zahlen zwischen 1 und 10 sind,

Me ein quaterniertes Ammoniumion oder das Kation eines Alkalimetalls ist,

das propoxylierte Anlagerungsprodukt von Natriumbisulfit an Butendiol-1,4, ferner die kationischen oder auch anionischen, einbaufähigen inneren Emulgatoren gemäss DE-OS 2 651 506 oder Diaminosulfonate der Formel $NH_2$–$(CH_2)_{2-6}$–NH–$(CH_2)_{2-3}$–$SO_3^{\ominus}$ Kation$^{\oplus}$. Ferner sind und auch die in DE-A-2 651 501 beschriebenen monofunktionellen, einbaufähigen hydrophilen Polyether bevorzugt, welche vorzugsweise ein Molekulargewicht von 200 bis 3000 und einen Polyoxyethylenanteil von 60 bis 95 Gew.-% besitzen.

Eine bevorzugte, einbaufähige, ionische Verbindungsklasse sind die Ammonium- oder Alaklisalze organischer Dihydroxymonocarbonsäuren, z.B. das Salz der 2,2-Dimethylol-propionsäure.

Die erfindungsgemäss zu verwendenden Dicyclohexylalkandiisocyanate D) der allgemeinen Formel

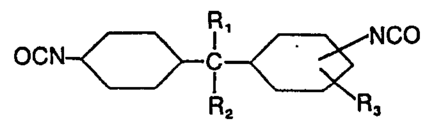

in der

$R_1$, $R_2$ und $R_3$ = H oder $C_1$–$C_4$-geradkettige oder -verzweigte Alkylreste bedeuten,

umfassen die Isomeren (z.B. 2,2'-, 2,4'- und 4,4'-Isomeren) und die cis/trans-, cis/cis- und trans/trans-Konformeren des Diisocyanato-dicyclohexylmethans. Aber auch die Vertreter der entsprechenden Ethyliden-, Propyliden-, Butylidenverbindungen, sowie weitere Homologe fallen darunter, z.B. 4,4'-Diisocyanato-dicyclohexyl-dimethylmethan. Weniger bevorzugt sind Diisocyanate, in denen $R_3$ nicht Wasserstoff, sondern einen einwertigen Kohlenwasserstoff bedeutet, z.B. Methyl, Ethyl, Propyl, Isopropyl, Butyl, Isobutyl oder tert.-Butyl.

Unter den anteilig einzusetzenden, nicht durch die obige Formel beschriebenen Diisocyanate E) sind Tetramethylendiisocyanat, Xylylendiisocyanat, sowie dessen perhydriertes Derivat, Cyclohexylendiisocyanat-1,3 und -1,4 sowie besonders bevorzugt das 3-Isocyanatomethyl-3,5,5-trimethylcyclohexylisocyanat und Hexamethylen-1,6-diisocyanat zu nennen.

Weitere, mitzuverwendende Diisocyanate sind Lysinmethylester-diisocyanat, 2,4- und/oder 2,6-Hexahydro-toluylendiisocyanat, 1,9-Diisocyanato-5-methylnonan, 1,8-Diisocyanato-2,4-dimethyloctan. Die cycloaliphatischen Diisocyanate können dabei in beliebigen Mischungen ihrer Stellungsisomeren, wie auch Stereoisomeren (Konformeren) eingesetzt werden.

Das Hydrazin (F)) wird vorzugsweise in Form seiner Ketazine (Umsetzungsprodukte mit z.B. Aceton oder anderen Ketonen wie Methyl-ethylketon) oder gegebenenfalls auch in Form seiner kohlensauren Salze eingesetzt. Übliche Zusatz- und Hilfsmittel, sowie Katalysatoren für die Polyurethanchemie können in üblicher Weise und Menge zugesetzt werden. Sie werden z.B. in der DE-A-2 854 384 aufgeführt.

Verfahren für die Herstellung erfindungsgemäss geeigneter stabiler, wässriger Polyurethan-

Dispersionen werden beispielsweise in den DE-B-1 178 586 (US-PS 3 480 592), 1 495 745 (US-PS 3 479 310) und 1 770 068 (US-PS 3 756 992), den DE-A-2 314 512 (US-PS 3 905 929), 2 314 513 (US-PS 3 920 598), 2 320 719 (GB-PS 1 465 572), 2 446 440, 2 555 534 und 2 811 148 (EP-A-4069) sowie von D. Dieterich in «Angewandte Chemie» 82, 53 (1970), beschrieben. Das allgemeine Prinzip dieser Verfahren besteht darin, in die Kette eines Polyurethan- bzw. Polyurethan-Harnstoff-Makromoleküls hydrophile Zentren als sogenannte innere Emulgatoren einzubauen. Als hydrophile Zentren kommen in diesem Zusammenhang anionische oder kationische Gruppen und/oder Substituenten und/oder $-CH_2CH_2-O-$Sequenzen in Betracht.

Zur Herstellung der PU-Dispersionen geht man im allgemeinen so vor, dass zunächst aus einem höhermolekularen Hexandiolpolyesterdiol, einem niedermolekularen Triol, sowie einem Überschuss an Polyisocyanat ein NCO-Prepolymeres mit endständigen NCO-Gruppen hergestellt wird, welches dann unter Kettenverlängerung, beispielsweise analog zu den Verfahren der DE-B-1 495 745 (US-PS 3 479 310), der DE-A-1 770 068 (US-PS 3 756 992) oder der DE-A-2 446 440 sowie DE-A-2 811 148 (EP-A-4069) in eine Polyurethan-Dispersion übergeführt wird. Sowohl die höhermolekulare Polyhydroxylverbindung als auch der gegebenenfalls mitverwendete niedermolekulare Alkohol kann dabei inonische Gruppen oder in ionische Gruppen überführbare Gruppierungen enthalten, wie sie beispielsweise in DE-A-1 770 068 und DE-A-2 446 440 angeführt werden. Es ist aber auch möglich, neben bzw. anstelle der ionisch modifizierten hoch- und niedermolekularen Akkohole als hydrophile Segmente Mono- oder Diole mit Ethylenoxid-Sequenzen in das Makromolekül einzubauen, wie sie z. B. in den DE-A-2 314 512 (US-PS 3 905 929), 2 551 094, 2 555 534 und 2 651 506 beschrieben werden. Prinzipiell kann man jedoch auch hydrophobe Prepolymere (also solche ohne hydrophile Zentren) aufbauen und diese dann unter Kettenverlängerung mit beispielsweise Diaminen oder Diolen, welche ionische Gruppen enthalten (DE-A-2 035 732) zu in Wasser dispergierbaren Polyurethanen bzw. Polyurethanharnstoffen, umsetzen.

Bei der Herstellung der NCO-Prepolymere werden die Reaktionspartner im allgemeinen in Mengenverhältnissen eingesetzt, die einem Verhältnis von Isocyanatgruppen zu gegenüber NCO-reaktiven Wasserstoffatomen, vorzugsweise Hydroxylgruppen, von 1,1 bis 10, vorzugsweise von 1,3 bis 3, entsprechen.

Die Herstellung der NCO-Prepolymeren erfolgt vorzugsweise in der Schmelze bei 30 bis 190 °C, vorzugsweise bei 50 bis 120 °C. Die Herstellung der Prepolymere kann selbstverständlich auch in Gegenwart von organischen Lösungsmitteln erfolgen.

Geeignete Lösemittel, die z. B. zur Viskositätserniedrigung besonders hochviskoser NCO-Prepolymerer eingesetzt werden können, sind z. B. Aceton, Methylethylketon, Essigsäureethylester, Cyclohexanon, Toluol, gegebenenfalls auch Dimethylformamid oder N-Methylpyrrolidon.

Die Lösemittelmenge kann so bemessen werden, dass die Kettenverlängerung der NCO-Prepolymeren mit Hydrazin und gegebenenfalls hydrophilen Komponenten im Lösungsmittel durchgeführt werden kann und die resultierende Lösung dünnflüssig genug ist, um sie mit Wasser in eine Dispersion zu überführen. Dabei ist es ratsam, ein Lösemittel zu verwenden, dessen Siedepunkt deutlich unter dem des Wassers liegt, so dass die destillative Entfernung erleichtert wird.

Bevorzugt werden aber die erfindungsgemässen Dispersionen nach dem in der DE-A-2 811 148 (EP-A-4069) beschriebenen Verfahren hergestellt. Hierbei wird das NCO-Prepolymer mit einem Azin vermischt und kann ohne Zuhilfenahme eines Lösemittels mit Wasser in eine Dispersion überführt werden. Die Kettenverlängerung läuft hier in heterogener Phase ab, da der Kettenverlängerer Hydrazin aus dem Azin erst langsam mit Wasser freigesetzt wird. Auch bei diesem Verfahren können Lösemittel eingesetzt werden; sie dienen hier jedoch meistens nur dazu, in kleinen Mengen dem Prepolymer zugesetzt, gegebenenfalls dessen Viskosität herabzusetzen, oder als Koaleszenzmittel. In diesem Fall sind hochsiedende Lösemittel sogar bevorzugt.

Die Festkörper der Dispersion enthalten 5 bis 50, bevorzugt 10 bis 30, (Pseudo-)Milliäquivalente an hydrophilen Gruppen pro 100 g Feststoff. Unter einem "Pseudomilliäquivalent" ist jene Menge an Ethylenoxid-Einheiten im Polyurethan, vorzugsweise in einer zu der Hauptkette des Polyurethanmoleküls seitenständigen Polyetherkette, zu verstehen, die ihrer hydrophilierenden Eigenschaften einem Milliäquivalent an ionischen Gruppen entspricht. Definitionsgemäss sollen 0,5 Gew.-% an $-CH_2-CH_2O-$Einheiten einem "Pseudomilliäquivalentprozent" entsprechen.

Die erfindungsgemässen Kompositionen enthalten die für ihre Dispergierbarkeit in Wasser notwendigen Emulgatoren in Form eingebauter hydrophiler Gruppen, wie sie oben beschrieben sind. Selbstverständlich ist aber auch ein Zusatz von an sich bekannten externen Emulgatoren möglich; der Anteil an eingebautem Emulgator kann in diesem Fall verringert werden.

Die Dispersionen weisen im allgemeinen einen Feststoffgehalt von 20 bis 60 Gew.-%, vorzugsweise 35 bis 50 Gew.-%, auf. Die Teilchendurchmesser der Dispersion können von 20 nm bis 1 µm variieren, sollen im allgemeinen jedoch zwischen 50 und 200 nm liegen.

Die erfindungsgemässen wässrigen PUR-Dispersionen können mit wässrigen Nicht-PUR-Dispersionen und wässrigen Lösungen anderer Polymerer verschnitten werden, z. B. mit Dispersionen von Vinyl- und/oder Dienpolymeren aus Vinylchlorid, Vinylidenchlorid, Vinylacetat, Vinylalkohol, Styrol, (Meth)Acrylsäureester, Butadien, Isopren, Chloropren; Lösungen von Polyvinylalkohol, Polyacrylamid, Polyvinylpyrrolidon, Stärke, Gelatine, Kasein; wässrige Dispersionen von Nitrocellulose u. a.

Den erfindungsgemässen Beschichtungsmassen können selbstverständlich auch die aus der Beschichtungstechnik an sich bekannten griffverbessernden Mittel, Pigmente, Verlaufmittel, Verdicker und andere Hilfsmittel zugemischt werden. Gegebenenfalls können sie auch (in Mengen von vorzugsweise weniger als 10 Gew.-%, bezogen auf wässrige Dispersionskomposition) Lösemittel, wie z.B. Alkohole, Amide oder Ketone, enthalten.

Die erfindungsgemässen Überzugsmittel eignen sich insbesondere als Deckstriche bzw. Finishe bei der Beschichtung von Textilien mit PVC. Im folgenden sollen drei verschiedene mögliche Verfahrensweisen zum Aufbringen der erfindungsgemässen Kompositionen beschrieben werden:

1. Auf eine kompakte, gegebenenfalls strukturierte oder geprägte PVC-Schicht, die auf ein Trägermaterial, beispielsweise ein Textil, appliziert worden ist, wird die erfindungsgemässe Dispersionskomposition z.B. durch Rakeln, Spritzen oder Drucken aufgebracht. In einem Ausheizkanal wird im allgemeinen die Beschichtung bei 70 bis 190 °C während ca. 20 bis 200 Sekunden getrocknet. Anschliessend wird das so erhaltene Kunstledermaterial gegebenenfalls maschinell geprägt und dann aufgerollt.

2. Die Polyurethan-Dispersions-Komposition wird auf ein Trennpapier oder ein anderes Trägermaterial (z.B. ein Stahlband) aufgerakelt und im Ausheizkanal getrocknet. Auf die getrocknete PUR-Schicht wird eine entgaste PVC-Paste über ein Rakelmesser aufgetragen. In die PVC-Paste wird das zu beschichtende Textil appliziert. In einem Ausheizkanal wird das PVC in an sich bekannter Weise geliert. Nach dem Abkühlen kann das Trennpapier bzw. das andere Trägermaterial abgezogen und das Kunstleder aufgerollt werden.

3. Die erfindungsgemässe Komposition wird auf ein Trennpapier oder ein anderes Trägermaterial wie z.B. ein Stahlband aufgerakelt und im Ausheizkanal getrocknet. Auf die getrocknete PUR-Schicht wird eine PVC-Paste aufgerakelt, die chemische Treibmittel, wie z.B. Azoisobuttersäuredinitril und Azodicarbonamid enthält (vgl. auch F. Lober, Anew. Chem. 64, 65 (1952); R. Reed, Plastics Progress 1955, 51; H.A. Scheurlen, Kunststoffe 47, 446 (1957)). In die PVC-Paste wird ein Textil einkaschiert und danach in einen Heizkanal gefahren. Während des Geliervorgangs entsteht der gewünschte PVC-Schaum. Nach dem Abkühlen des Materials auf in der Regel unter 80 °C wird das Trägermaterial abgezogen und das so erhaltene Kunstleder aufgerollt.

Auch partielles Schäumen durch Drucken der Schaumpaste oder Verwendung von Schauminhibitoren ist möglich.

Während das Verfahren 1) eine Direktbeschichtung des PVC-Textil-Verbundes mit einer Polyurethan-Dispersions-Komposition darstellt, sind die Verfahren 2) und 3) sogenannte Umkehrbeschichtungen. Die Dicke des Polyurethan-Deckstrichs liegt in allen Fällen bei ca. 5 bis 100 g/m², vorzugsweise 8 bis 25 g/m².

Beim Gelieren von PVC-Pasten werden in der Regel Temperaturen von ca. 170 bis 200 °C angewandt. Daher sollte der Schmelzpunkt eines Deckstriches auf PVC oberhalb von 200 °C liegen. PVC ist ein äusserst hydrolysestabiler Kunststoff. Aus diesem Grunde sollte der Finish ebenfalls möglichst hydrolysestabil sein, um nicht eher als das PVC abgebaut zu werden; dabei ist zu berücksichtigen, dass PVC im Laufe der Zeit geringe Mengen an Salzsäure abgibt, welche die Hydrolysebeständigkeit des Deckstriches negativ beeinflussen. Daneben können auch die im PVC zur Senkung der Geliertemperatur und als Stabilisatoren eingesetzten Metallsalze (in der Regel Blei-, Cadmium- oder Zinkverbindungen) die Hydrolysenbeständigkeit beeinträchtigen.

Ein wesentliches Kriterium eines guten PVC-Deckstrichs ist schliesslich noch eine relativ geringe Quellung in den handelsüblichen Weichmachern für PVC. Sie ist stark abhängig von der Art der Weichmacher (im allgemeinen Ester aus Phthalsäure, Adipinsäure, Phosphorsäure oder Alkylsulfonsäuren mit α-Ethylhexanol, n-Butanol, Benzylalkohol, Phenol und/oder Kresol). Eine geringe Quellung des Deckstrichmaterials im Weichmacher für PVC ist andererseits sogar notwendig, um eine gute Haftung auf Weich-PVC herzustellen und eine gesteigerte Flexibilität der PUR-Deckschicht zu erreichen. Um aber zu starke Migration von Weichmacher an die Oberfläche zu verhindern, sollte die Quellung der Finishs möglichst gering sein.

Überraschenderweise werden alle diese Kriterien von den erfindungsgemässen Beschichtungssystemen in optimaler Weise erfüllt.

Eine Prägung der erfindungsgemäss hergestellten fertigen Beschichtung ist selbstverständlich jederzeit möglich. So kann das beschichtete Textil beispielsweise direkt im Anschluss an den Trokken- oder Geliervorgang, gegebenenfalls aber auch erst nach kürzerer oder auch längerer Lagerzeit der Beschichtung, geprägt werden. Beim Umkehrverfahren ist durch die Verwendung eines geprägten Trennpapiers oder anderen Trägermaterials eine entsprechende Oberflächenstrukturierung schon während der Beschichtungsherstellung zu erzielen.

Die folgenden Beispiele dienen zur Erläuterung der Erfindung. Wenn nicht anders vermerkt, sind Mengenangaben als Gewichtsteile bzw. Gewichtsprozente zu verstehen.

Beispiel 1

1.1 Herstellung der PUR-Dispersion

Ansatz:

| | |
|---|---|
| 554 g | Hexandiol-1.6-polyadipat (OH-Zahl 134) |
| 23,0 g | Trimethylolpropan |
| 53,0 g | Dimethylolpropionsäure |
| 33,0 g | Triethylamin (Katalysator) |
| 200 g | 1,6-Hexandiisocyanat |
| 310 g | 4,4′-Dicyclohexylmethan-diisocyanat |
| 69,5 g | Acetonazin |
| 1860 g | entsalztes Wasser |

Durchführung: (gemäss DE-A-2 811 148)

In das bei 120 °C entwässerte Hexandiol-polyadipat mischt man das Trimethylolpropan, die Dimethylolpropionsäure und das Triethylamin und gibt bei 60 °C die Diisocyanate zu. Man rührt bei 80 °C, bis ein konstant bleibender NCO-Wert erreicht ist. Dann lässt man auf 50 °C abkühlen und rührt in die mässig viskose NCO-Prepolymerschmelze das Acetonazin ein, wobei die Temperatur leicht abfällt und die Viskosität weiter abnimmt. Unter gutem Rühren lässt man jetzt das Wasser zulaufen und rührt 2 Stunden nach.

Die entstandene Dispersion hat einen Feststoffgehalt von 40% und eine Fordbecher-Viskosität (4 mm-Düse) von 16 Sekunden und einen pH-Wert von 7,5. Der Feststoff enthält 32 Milliäquivalent-% an Carboxygruppen.

Filmeigenschaften:

| | |
|---|---|
| Erweichungsbereich | 200 °C |
| Shore A-Härte | 92 |
| 100%-Modul | 17 MPa |

1.2 Herstellung eines Deckstriches für geschäumtes PVC

Auf einem handelsüblichen Trennpapier (z.B. ®Transkote VEM C1S der Fa. S.D. Warren) wird die unter 1.1 beschriebene Dispersion zusammen mit einem Polyacrylsäure-Verdicker mittels einer Walzenrakel mit eingeschliffenem Rakelmesser derart aufgetragen, dass nach dem Trocknen bei 80 bis 150 °C ein Film von 10 g/m² entsteht.

Streichpaste:

100 Gew.-Teile 40%ige PUR-Dispersion von Beispiel 1.1
1 Gew.-Teil Polyacrylsäureverdicker
5 Gew.-Teile wässrige Pigmentpräparation mit Ammoniak auf pH 8 eingestellt.

Auf dem getrockneten PUR-Film wird eine PVC-Treibschaummischung folgender Art aufgebracht:

55 Gew.-Teile eines PVC-Plastisols (z.B. ®Solvic 336)
9 Gew.-Teile Weichmacher Dioctylphthalat
36 Gew.-Teile Weichmacher Didecylphthalat
10 Gew.-Teile Kreide
1 Gew.-Teil $SiO_2$-Pulver
1 Gew.-Teil Azoisobuttersäuredinitril
1 Gew.-Teil Cd/Zn-Stearat
5 Gew.-Teile Eisenoxid-Gelbpigment

Die PVC-Treibpaste wird in einer Auflagemenge von 200 g/m² mit einem Baumwoll-Gewebe kaschiert und bei 190 °C innerhalb von 1,5 Minuten ausgeheizt. Anschliessend wird abgekühlt und vom Papier getrennt.

Der so erhaltene Beschichtungsartikel zeichnet sich durch trockenen Oberflächengriff und hohe Knickechtheit aus; die PUR-Schicht haftet sehr gut auf dem PVC-Schaum(haft)-strich.

Der Deckstrich stellt eine gute Sperre gegen das Einwandern der im Schaum enthaltenen Weichmacher dar, da er in diesen nur geringfügig quillt. Der pigmentierte Deckstrich erleidet bei hohem Temperaturen keine Farbverschiebung, da sich der ihm zugrundeliegende PUR-Film bei der Geliertemperatur des PVC-Schaums nicht verfärbt.

Beispiel 2

2.1 Herstellung der PUR-Dispersion

Ansatz:

485 g Hexandiol-1.6-polyadipat (OH-Zahl 134)
20 g Trimethylolpropan
85 g propoxyliertes Addukt aus 2-Butendiol-1,4 und $NaHSO_3$ (Mol-Gewicht 425)
365 g 4,4'-Dicyclohexylmethandiisocyanat
67 g 1,6-Hexandiisocyanat
50 g Acetonazin
107 g N-Methylpyrrolidon
1500 g entsalztes Wasser

Durchführung: s. Beispiel 1.1; vgl. DE-A-2 811 148

Die so erhaltene Dispersion hat einen Feststoffgehalt von 40%, eine Fordbecherviskosität (4 mm Düse) von 19 Sekunden und einen pH-Wert von 6,8. Der Feststoff enthält 19 Milliäquivalentprozent an $SO_3^{(-)}$-Gruppen.

Ein aus der Dispersion hergestellter Film hat einen Härtegrad von 94 Shore A, einen 100%-Modul von 20 MPa, der Film erweicht oberhalb 200 °C.

2.2 Herstellung eines Deckstriches für geschäumtes PVC

Streichpaste:

100 Teile 40%ige PUR-Dispersion
2,0 Teile Polyacrylsäureverdicker
10 Teile wässrige Pigmentpräparation mit Ammoniak auf pH 8 einstellen.

Der analog 1.2 hergestellte PUR/PVC-Beschichtungsartikel hat sehr trockenen Griff, weist sehr gute Knickechtheit und hervorragende Haftung zum PVC-Schaum auf.

Der Deckstrich stellt eine gute Sperre gegen das Einwandern der im Schaum enthaltenen Weichmacher dar, da er in diesen nur geringfügig quillt. Der pigmentierte Deckstrich erleidet bei hohen Temperaturen keine Farbverschiebung, da sich der ihm zugrundeliegende PUR-Film bei der Geliertemperatur des PVC-Schaums nicht verfärbt.

Beispiel 3

3.1 Herstellung der PUR-Dispersion

Ansatz:

650 g 1,6-Hexandiol-polycarbonat (OH-Zahl 112)
13,4 g Trimethylolpropan
85 g propoxyliertes Addukt aus 2-Butendiol-1,4 und $NaHSO_3$ (Mol-Gewicht 425)
315 g 4,4'-Dicyclohexylmethandiisocyanat
44,4 g Isophorondiisocyanat
33,6 g 1,6-Hexandiisocyanat
52,8 g Acetonazin
1780 g entsalztes Wasser

Durchführung: siehe Beispiel 1.1, vgl. DE-A-2 811 148

Die so erhaltene Dispersion hat einen Feststoffgehalt von 40%, eine Fordbecherviskosität (4 mm-Düse) von 20 Sekunden und einen pH-Wert von 7,5. Der Feststoff enthält 17 Milliäquivalentprozent an $SO_3^{(-)}$-Gruppen.

Ein aus der Dispersion hergestellter Film hat einen Härtegrad von 92 Shore A, einen 100%-Modul von 16 MPa, der Film erweicht oberhalb 200 °C.

3.2 Herstellung eines Deckstriches bzw. Finishs auf PVC

Streichpaste:

100 Teile 40%ige PUR-Dispersion 3.1

1,0 Teile Polyacrylsäureverdicker

15 Teile wässrige Pigmentpräparation mit Ammoniak auf pH 8 einstellen

Der analog 1.2 hergestellte PUR-PVC-Beschichtungsartikel hat sehr trockenen Griff, gute Knickechtheit und sehr gute Haftung zum PVC-Schaum.

Der Deckstrich stellt eine gute Sperre gegen das Einwandern der im Schaum enthaltenen Weichmacher dar, da er in diesen nur geringfügig quillt. Der pigmentierte Deckstrich erleidet bei hohen Temperaturen keine Farbverschiebung, da sich der ihm zugrundeliegende PUR-Film bei der Geliertemperatur des PVC-Schaums nicht verfärbt.

**Patentansprüche**

1. Überzugsmittel auf der Basis wässriger, emulgatorfreier Polyurethandispersionen mit einem Festkörper aus im wesentlichen linearen Polyesterdiolen, Diisocyanaten, hydrophile Gruppen tragenden, gegenüber Isocyanaten mono- und/oder difunktionellen Verbindungen, sowie gegebenenfalls niedermolekularen trifunktionellen Komponenten und difunktionellen Kettenverlängerern, sowie ferner gegebenenfalls üblichen Zusatzstoffen, Hilfsmitteln und Katalysatoren, dadurch gekennzeichnet, dass der Festkörper aus

A) 30 bis 60 Gew.-% eines Hexandiol-1,6-polyesterdiols vom Molekulargewicht 500 bis 6000,

B) 0 bis 8 Gew.-% eines niedermolekularen Triols mit einem Molekulargewicht von 92 bis 399,

C) 3 bis 30 Gew.-% einer oder mehrerer, kationische und/oder anionische Gruppen tragender und/oder nicht-ionische Polyoxyethylensegmente aufweisender, ein- oder mehrfunktioneller Verbindungen,

D) 20 bis 50 Gew.-% eines Diisocyanats der Formel

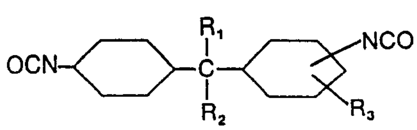

in der

$R_1$, $R_2$ und $R_3$ gleich oder verschieden sind und Wasserstoff oder einen geradkettigen oder verzweigten aliphatischen Kohlenwasserstoffrest mit 1 bis 4 C-Atomen bedeuten,

E) 2,5 bis 20 Gew.-% anderer aliphatischer und/oder cycloaliphatischer Diisocyanate, sowie

F) 0,5 bis 4 Gew.-% Hydrazin

aufgebaut ist.

2. Überzugsmittel nach Anspruch 1, dadurch gekennzeichnet, dass die Polyesterdiolkomponente A) ein Hexandiol-1,6-polyadipat und/oder Hexandiol-1,6-polycarbonat mit einem Molekulargewicht von 500 bis 3000 ist.

3. Überzugsmittel nach Ansprüchen 1 und 2, dadurch gekennzeichnet, dass das niedermolekulare Triol B) Glycerin und/oder Trimethylolpropan ist.

4. Überzugsmittel nach Ansprüchen 1 bis 3, dadurch gekennzeichnet, dass die nichtionische Verbindung ein monofunktioneller Polyether ist, der ein Molekulargewicht von 500 bis 3000 und einen Polyoxyethylenanteil von 60 bis 95 Gew.-% besitzt.

5. Überzugsmittel nach Ansprüchen 1 bis 3, dadurch gekennzeichnet, dass die ionische Verbindung C) die allgemeine Formel

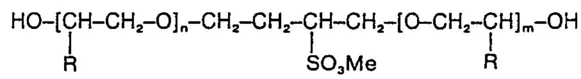

besitzt, in der

R Wasserstoff oder ein organischer Rest mit 1 bis 8 Kohlenwasserstoffatomen ist,

m und n ganze Zahlen zwischen 1 und 10 sind und

Me ein quaterniertes Ammoniumion oder das Kation eines Alkalimetalls ist.

6. Überzugsmittel nach Ansprüchen 1 bis 3, dadurch gekennzeichnet, dass die ionische Verbindung das Ammonium- und/oder Alkalimetallsalz einer organischen Dihydroxycarbonsäure ist.

7. Überzugsmittel nach Ansprüchen 1 bis 6, dadurch gekennzeichnet, dass in der Verbindung der allgemeinen Formel

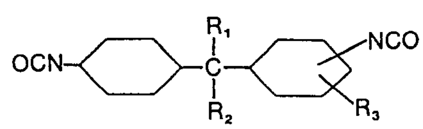

$R_1$, $R_2$ und $R_3$ Wasserstoffatome sind.

8. Überzugsmittel nach Ansprüchen 1 bis 7, dadurch gekennzeichnet, dass das Diisocyanat E) 3-Isocyanatomethyl-3,5,5-trimethyl-cyclohexylisocyanat und/oder 1,6-Diisocyanatohexan ist.

9. Verwendung von Dispersionen zur Direkt- und Umkehrbeschichtung von homogenem oder geschäumtem PVC, dadurch gekennzeichnet, dass man zur Beschichtung als Überzugsmittel Polyurethan-Dispersionen gemäss Ansprüchen 1 bis 8 einsetzt.

**Claims**

1. Coating compositions based on aqueous, emulsifier-free polyurethane dispersions having a solid content comprising essentially linear polyester diols, diisocyanates, compounds which carry hydrophilic groups and are mono- and/or difunctional towards isocyanates and optionally low molecular weight trifunctional components and difunctional chain lengtheners, and in addition optionally conventional additives, auxiliaries and catalysts, characterised in that the solid content is composed of

A) 30 to 60% by weight of a hexanediol-1,6-polyester diol of a molecular weight of 500 to 6000,

B) 0 to 8% by weight of a low molecular weight triol having a molecular weight of 92 to 399,

C) 3 to 30% by weight of one or more mono- or polyfunctional compounds carrying cationic and/or anionic groups and/or containing non-ionic polyoxyethylene segments,

D) 20 to 50% by weight of a diisocyanate of the formula

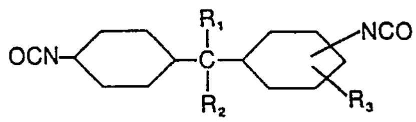

in which

$R_1$, $R_2$ and $R_3$ are identical or different and denote hydrogen or a straight-chain or branched aliphatic hydrocarbon radical with 1 to 4 C atoms,

E) 2.5 to 20% by weight of other aliphatic and/or cycloaliphatic diisocyanates and

F) 0.5 to 4% by weight of hydrazine.

2. Coating compositions according to Claim 1, characterised in that the polyester diol component A) is a hexanediol-1,6-polyadipate and/or hexanediol-1,6-polycarbonate with a molecular weight of 500 to 3000.

3. Coating compositions according to Claims 1 and 2, characterised in that the low molecular weight triol B) is glycerol and/or trimethylol propane.

4. Coating compositions according to Claims 1 to 3, characterised in that the non-ionic compound is a monofunctional polyether which has a molecular weight of 500 to 3000 and a polyoxyethylene content of 60 to 95% by weight.

5. Coating compositions according to Claims 1 to 3, characterised in that the ionic compound C) has the general formula

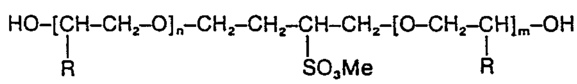

in which

R is hydrogen or an organic radical with 1 to 8 hydrocarbon atoms,

m and n are integers between 1 and 10 and

Me is a quaternised ammonium ion or the cation of an alkali metal.

6. Coating compositions according to Claims 1 to 3, characterised in that the ionic compound is the ammonium and/or alkali metal salt of an organic dihydroxycarboxylic acid.

7. Coating compositions according to Claims 1 to 6, characterised in that in the compound of the general formula

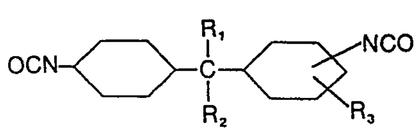

$R_1$, $R_2$ and $R_3$ are hydrogen atoms.

8. Coating compositions according to Claims 1 to 7, characterised in that the diisocyanate E) is 3-isocyanatomethyl-3,5,5-trimethylcyclohexyl isocyanate and/or 1,6-diisocyanatohexane.

9. Use of dispersions for the direct and reverse coating of homogeneous or foamed PVC, characterised in that polyurethane dispersions according to Claims 1 to 8 are used as coating compositions for the coating.

**Revendications**

1. Produit de revêtement à base de dispersions aqueuses de polyuréthannes exemptes d'agents émulsionnants dont la matière solide consiste en polyester-diols essentiellement linéaires, diisocyanates, composés mono- et/ou di-fonctionnels à l'égard des isocyanates, portant des groupes hydrophiles, et le cas échéant composants trifonctionnels à bas poids moléculaire et agents d'allongement des chaînes difonctionnels, et encore, le cas échéant additifs, produits auxiliaires et catalyseurs usuels, caractérisé en ce que la matière solide est constituée de

A) 30 à 60% en poids d'un polyester-diol du 1,6-hexane-diol, de poids moléculaire 500 à 6000,

B) 0 à 8% en poids d'un triol à bas poids moléculaire, de poids moléculaire 92 à 399,

C) 3 à 30% en poids d'un ou plusieurs composés mono ou polyfonctionnels portant des groupes cationiques et/ou anioniques et/ou contenant des segments non ioniques de polyoxyéthylène,

D) 20 à 50% en poids d'un diisocyanate de formule

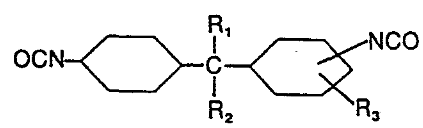

dans laquelle

$R_1$, $R_2$ et $R_3$, ayant des significations identiques ou différentes, représentant l'hydrogène ou un reste hydrocarboné aliphatique à chaîne droite ou ramifiée en $C_1$–$C_4$,

E) 2,5 à 20% en poids d'autres diisocyanates aliphatiques et/ou cycloaliphatiques, et

F) 0,5 à 4% en poids d'hydrazine.

2. Produit de revêtement selon la revendication 1, caractérisé en ce que le composant polyester-diol A) est un polyadipate du 1,6-hexane-diol et/ou un polycarbonate du 1,6-hexane-diol de poids moléculaire 500 à 3000.

3. Produit de revêtement selon les revendications 1 et 2 caractérisé en ce que le triol à bas poids moléculaire B) est le glycérol et/ou le triméthylolpropane.

4. Produit de revêtement selon les revendications 1 à 3, caractérisé en ce que le composé non ionique est un polyéther monofonctionnel de poids moléculaire 500 à 3000 contenant 60 à 95% en poids de motifs polyoxyéthylène.

5. Produit de revêtement selon les revendications 1 à 3, caractérisé en ce que le composé ionique C) répond à la formule générale

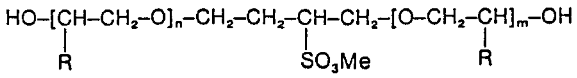

dans laquelle

R représente l'hydrogène ou un reste organique en $C_1$–$C_8$,

m et n sont des nombres entiers de 1 à 10 et

Me est un ion ammonium quaternaire ou le cation d'un métal alcalin.

6. Produit de revêtement selon les revendications 1 à 3, caractérisé en ce que le composé ionique est le sel d'ammonium et/ou de métal alcalin d'un acide organique dihydroxycarboxylique.

7. Produit de revêtement selon les revendications 1 à 6, caractérisé en ce que, dans le composé de formule générale

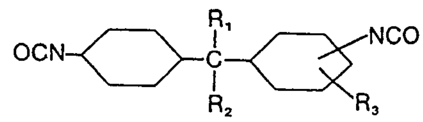

$R_1$, $R_2$ et $R_3$ sont des atomes d'hydrogène.

8. Produit de revêtement selon les revendications 1 à 7, caractérisé en ce que le diisocyanate E) est l'isocyanate de 3-isocyanatométhyl-3,5,5-triméthyl-cyclohexyle et/ou le 1,6-diisocyanatohexane.

9. Utilisation de dispersions pour le revêtement direct ou avec inversion du PVC homogène ou gonflé en mousse, caractérisé en ce que l'on utilise en tant que produits de revêtement à cet effet des dispersions de polyuréthannes selon les revendications 1 à 8.